# EUROPÄISCHE PATENTANMELDUNG

(11) **EP 2 290 159 A2**
(43) Veröffentlichungstag der Anmeldung: **02.03.2011**
(21) Anmeldenummer: 10011002.2
(22) Anmeldetag: 18.05.2006
(51) Int. Cl.: D21B 1/34

(54) **Verfahren zum Gewinnen von Fasern aus einer Fasern enthaltenden Mischung**

(30) Priorität: 18.05.2005 DE 102005023566; 19.05.2005 DE 102005023750; 22.09.2005 DE 102005045469
(62) Teilanmeldung aus: 06753178.0
(71) Anmelder: Boltersdorf, Hans-Joachim, 56656 Brohl-Lützing (DE)
(72) Erfinder: Boltersdorf, Hans-Joachim, 56656 Brohl-Lützing (DE)
(74) Vertreter: Castell, Klaus

(57) **Zusammenfassung**

Um den Durchsatz eines Verfahrens zum Gewinnen von Fasern aus einer Fasern enthaltenden Mischung, bei welchem die Mischung einem Pulper mit einem Faserstoffaustrag aufgegeben wird, zu erhöhen, schlägt die Erfindung vor, dass der Freifaseranteil im Pulper unter 80% beträgt.

## Beschreibung

Die Erfindung betrifft ein Verfahren zum Gewinnen von Fasern aus einer Fasern enthaltenden Mischung, bei welchem die Mischung einem Pulper mit einem Faserstoffaustrag aufgegeben wird.

Anordnungen für derartige Verfahren sind beispielsweise aus der EP 0 829 571 A1, der DE 198 33 580 Au bzw. auf der EP 1 275 770 A2 bekannt. Hierbei handelt es sich um kontinuierlich betriebene Pulper, in welche Stippen, Rejecte oder sonstige Materialien, bei denen Faserstoffe an Begleitstoffen anhaften bzw. sonstwie mit diesen verbunden sind, aufgegeben werden. Durch die in dem Pulper stattfindende Bewegung gelingt es, einen großen Teil der Faserstoffe - wenn nicht sämtliche Faserstoffe - von den Begleitstoffen zu trennen und etwaige Faserverbünde, wie sie beispielsweise in Stippen bzw. in Papierschnipseln oder ähnlichen zu finden sind, zu lösen. Hierzu wird das zu behandelnde Gemenge in dem entsprechenden Pulper bei hoher Gesamtstoffdichte und bei gleichzeitig niedriger Faserstoffdichte behandelt.

Es ist Aufgabe der vorliegenden Erfindung ein Verfahren zum Gewinnen von Fasern aus einer Fasern enthaltenden Mischung bereitzustellen, welches gegenüber dem Stand der Technik einen sehr hohen Durchsatz erlaubt.

Als Lösung schlägt die Erfindung ein Verfahren zum Gewinnen von Fasern aus einer Fasern enthaltenden Mischung vor, bei welchem die Mischung einem Pulper mit einem Faserstoffaustrag aufgegeben wird und welches sich dadurch auszeichnet, dass der Freifaseranteil im Pulper unter 80% bzw. dass der Anteil an Stückstoffen im Pulper über 20% beträgt.

In Abweichung zum Stand der Technik, bei welchem bei hoher Gesamtstoffdichte und gleichzeitig niedriger Faserstoffdichte, also der Dichte an Faserstoffen in Stippen und Freifaserstoffen, gearbeitet werden soll, hat sich überraschender Weise herausgestellt, dass durch die Wahl eines geeigneten Anteilverhältnisses zwischen Freifasern einerseits und Stückstoffen andererseits der Durchsatz durch den Pulper zielgerichteter optimiert werden kann. Hierbei scheint es, dass durch die geeignete Wahl des Freifaseranteils bzw. der Dichte oder des Anteils an Stückstoffen die Effektivität eines mit derartigen Materialien beaufschlagten Pulpers - und somit insbesondere der Durchsatz an Begleitstoffen, Stippen und/oder Fasern - optimiert werden kann.

Bei den zu trennenden Materialien handelt es sich in der Regel um Faserstoffe bzw. Konglomerate aus Faserstoffen, wie sie beispielsweise Stippen, Papierschnipsel, Tapeten, Etiketten oder ähnliches darstellen, die mit anderen Begleitstoffen zusammen auftreten. Hierbei muss zwischen den Fasern und den Begleitstoffen nicht zwingend eine feste Verbindung bestehen, jedoch ist das beschriebene Verfahren in der Lage, auch feste Verbindungen zwischen den Begleitstoffen und den Faserstoffen zu lösen. So eignet es sich beispielsweise zum Trennen von Verbundmaterialien oder Etiketten, bei denen Kunststoffanteile, wie beispielsweise Folien, faserhaltige Schichten und Klebstoffe bzw. Klebstoffschichten sowie Fasern, beispielsweise in Form von Papier, miteinander verbunden sind. Durch das erfindungsgemäße Verfahren lassen sich Fasern aus derartigen Materialien herauslösen, wobei diese Fasern sowohl im Faserverbund, wie beispielsweise bei Stippen, als auch als Einzelfasern vorliegen können. In diesem Zusammenhang sei der Begriff "haften" dementsprechend erläutert, dass hierunter eine Verbindung zwischen Begleitstoffen und Fasern bzw. Faserstoffen verstanden wird, die über ein bloßes Nebeneinanderliegen in der Fasern und der Begleitstoffe hinausgeht, wobei selbstverständlich auch einzelne Fasern oder Stippen, die lediglich neben Begleitstoffen zu liegen kommen, in dem zu trennenden Gemisch aus Faserstoffen und Begleitstoffen vorliegen können. Insbesondere kann es auch vorkommen, dass einzelne Fasern von den Begleitstoffen oder aber auch von Stippen eingewickelt bzw. sonst wie mechanisch an einem Loslösen gehindert werden, wobei in diesem Fall vorliegend ebenfalls von einem "haften" der Freifasern an den Begleitstoffen oder Stippen gesprochen wird.

In vorliegendem Zusammenhang beschreibt der Begriff "Stückstoff" allgemein Bestandteile der dem Pulper aufgegebenen Mischung, die nicht durch dessen Trennvorrichtung gelangen können, wie dieses Schnipsel, Schnitzel oder Stippen bzw. die Begleitstoffe darstellen. Während der Verweildauer im Pulper können diese Stückstoffe sich zur Gänze auflösen, wenn eine Begleitstofffreie Mischung dem Pulper aufgegeben wurde. Ansonsten liegen Begleitstoffe mit oder ohne an diesen haftenden Faserstoffen bzw. nur unwirtschaftlich zu zerfasernde Schnipsel in dem Pulper vor, der dann vorteilhaft über einen Begleitstoffaustrag verfügen kann.

Das vorstehende beschriebene Verfahren eignet sich insbesondere für einen Pulper mit einem kontinuierlichen Faserstoffaustrag. Hierdurch wird insbesondere eine einfache Einstellung bzw. Kontrolle des Freifaseranteils ermöglicht, indem der Durchsatz des Austrags entsprechend gewählt bzw. geregelt wird.

Einerseits können auch die Stückstoffe, wie Begleitstoffe und/oder große Schnipsel oder ähnliches, kontinuierlich aus dem Pulper entfernt werden, so dass eine verhältnismäßig lange durchgehende Betriebsdauer erreicht werden kann, wobei zwischenzeitliche Stillstandszeiten, beispielsweise für Reinigungsarbeiten zum Entfernen von Sand oder ähnlichem, nicht ausgeschlossen sind. Andererseits ist es, auch unabhängig von der konkreten Einstellung der Anteile von Freifasern bzw. Stückstoffen vorteilhaft, die Stückstoffe periodisch aus dem Pulper zu entfernen. Ein derartiger, diskontinuierlicher Betrieb des Pulpers hinsichtlich der Stückstoffe bei gleichzeitig kontinuierlichem Faserstoffaustrag ermöglicht es, unabhängig von den übrigen Merkmalen vorliegender Erfindung, von Fasern aus einer Fasern enthaltenden Mischung mit hoher Effektivität bzw. mit hohem Durchsatz zu gewinnen.

Es versteht sich, dass, wie bereits vorstehend erwähnt, durch den Durchsatz am Faserstoffaustrag aber auch durch die Wahl der Trenneinrichtung zwischen Pulper und Faserstoffaustrag, beispielsweise durch eine geeignete Siebgröße, sowie durch die Bewegung des Gemenges im Pulper und durch den Wasserdurchsatz die Freifaseranteile bzw. die Anteile an Stückstoffe, die Gesamtstoffdichte sowie die Verhältnisse an Freifasern im Pulper bzw. im Faserstoffaustrag in gewünschter Weise eingestellt werden können. Hierbei ist insbesondere zu berücksichtigen, dass im Stückstoffaustrag ebenfalls Fasern vorliegen bzw. vorliegen können, während auch im Faserstoffaustrag bestimmte Begleitstoffe, die jedoch von Fasern weitesgehend befreit sind, im geringen Maße vorliegen können.

Der Durchsatz durch den Pulper lässt sich insbesondere optimieren, wenn der Freifaseranteil im Pulper unter 75% bzw. unter 70% beträgt. Dementsprechend ist es vorteilhaft, wenn der Anteil an den Stückstoffen im Pulper über 25% bzw. über 30% liegt.

In konkreten Ausführungsformen hat es sich als vorteilhaft herausgestellt, wenn der Freifaseranteil im Pulper unter 10% bzw. der Anteil an den Stückstoffen über 90% liegt. Hierdurch kann eine besonders gute Reibung bzw. mechanische Belastung der Stückstoffe mit den an diesen haftenden Faserstoffen gewährleistet werden. Dementsprechend ist es besonders vorteilhaft, wenn der Freifaseranteil im Pulper unter 5% bzw. unter 1% oder sogar unter 0,5% liegt bzw. wenn der Anteil an Stückstoffen über 95% bzw. über 99% oder sogar über 99,5% ist. Insbesondere diese niedrigen Freifaseranteile bzw. hohen Anteile an Stückstoffen liefern unter Extrembedingungen, wie beispielsweise bei schwer zerfaserbaren Stückstoffen, wie bei Etiketten, Tapeten oder schwer zerfaserbaren Altpapier, hervorragende Trennleistungen, obgleich an sich nicht zu erwarten war, dass bei derartig niedrigen Freifaseranteilen effektive Trennvorgänge stattfinden können.

Die Grenzen von Freifaserstoffanteil und dem Anteil an Stückstoffen addiert sich vorliegend auf 100 %, indem davon ausgegangen wird, dass sämtliche Bestandteile des in dem Pulper befindlichen Gemenges, welche nicht Faserstoff oder Dispersionsmittel, wie in der Regel Wasser, sind, als Stückstoffe erfasst werden. Abweichungen können auftreten, wenn weitere Stoffe, wie Sand oder Metall, in diesem Gemenge zu finden sind, die nicht ohne weiteres wie die Stückstoffe behandelt werden können. In letzterem Fall bleiben diese weiteren Stoffe bei den hier aufgeführten Betrachtungen außer Acht, während ansonsten diese weiteren Stoffe als Begleitstoffe zu behandeln sind. Ebenso werden große Faserstoffagglomerate bzw. sehr große feste Bestandteile der dem Pulper aufgegebenen Mischung, wie beispielsweise ganze Tapetenrollen oder Altpapierballen, in die vorliegenden Berechnungen nicht mit einbezogen, sondern erst berücksichtigt, wenn durch die Arbeit des Pulpers diese Agglomerate in Schnipselgröße aufgeschlossen wurden, wobei hier ggf. Zerfallskurven für derartige Agglomerate beispielhaft ermittelt und ergänzend berücksichtigt werden können, wenn dieses hinsichtlich der Genauigkeit des Betriebspunktes des Pulpers für notwendig erachtet wird.

Während die vorstehenden Prozentangaben sich auf die Gesamtstoffdichte beziehen, wobei davon ausgegangen wird, dass die Summe aus Stückstoffen und Freifasern sämtliche Stoffe darstellt, welche neben Wasser oder einem sonstigen Dispersionsmittel in dem Pulper zu finden sind, hat es sich unabhängig von den übrigen Merkmalen vorliegender Erfindung herausgestellt, dass die Freifaserdichte im Faserstoffaustrag, nämlich der Volumenanteil an Freifasern bezogen auf das Gesamtvolumen aus Freifasern und Wasser bzw. Dispersionsmittel im Faserstoffaustrag unter 3% gewählt wird. Eine derartige Freifaserdichte kann ebenfalls durch geeignete Wahl der Randbedingungen, wie beispielsweise des Siebes und der Bewegung im Pulper bzw. durch die Wahl des Wasserdurchsatzes in gewünschter Weise eingestellt werden. Besonders vorteilhaft ist es, wenn die Freifaserdichte unter 2% bzw, unter 1 % oder sogar weit darunter liegt, um eine hohe Effektivität beim Trennen zu gewährleisten.

Auch hat sich, unabhängig von den übrigen Merkmalen vorliegender Erfindung, hinsichtlich eines erhöhten Durchsatzes beim Gewinnen von Fasern aus einer Fasern enthaltenden Mischung es als vorteilhaft erwiesen, wenn die Gesamtstoffdichte, also der Volumenanteil aller im Pulper befindlichen Stoffe in Bezug auf das Gesamtvolumen aus diesen Stoffen und dem Dispersionsmitteln bzw. Wasser, um mindestens den Faktor 5, vorzugsweise 10, größer ist als die Faserstoffdichte im Faserstoffaustrag.

Kumulativ bzw. alternativ hat es sich herausgestellt, dass die Freifasern, entgegen der ansonsten üblichen Praxis, möglichst kurz in dem Pulper verweilen sollen, um einen hohen Durchsatz zu erzielen. Dieses kann insbesondere durch einen Faserstoffaustrag mit hohem Durchsatz bzw. mit einer sehr niedrigen Freifaserdichte gewährleistet werden. Hierbei hat es sich als vorteilhaft herausgestellt, wenn bei einem Verfahren zum Gewinnen von Fasern aus einer Fasern enthaltenden Mischung, bei welchem die Mischung einem Pulper mit einem Faserstoffaustrag aufgegeben wird, die durchschnittliche Verweildauer der Fasern der Faserstoffe im Pulper unter 10, vorzugsweise unter 6 bzw. 2, Minuten beträgt. Hierbei wird die durchschnittliche Verweildauer anhand der im Pulper befindlichen Menge an Fasern sowie der ausgetragenen Menge an Freifasern pro Zeiteinheit ermittelt.

Die geeignete Wahl der Verweildauer kann stark von den Materialien abhängen, so dass alternativ, insbesondere für kritische Materialkombinationen, wie sie beispielsweise bei Etiketten zu finden sind, die Verweildauer anhand des Aufschlussverhaltens in einem diskontinuierlichen Trennverfahren ermittelt werden kann. Hierbei wird in einem diskontinuierlichen Pulper bestimmt, wie lange es dauert, bis 95 % der aufgegeben Fasern, die in der dem Pulper aufgegebenen Mischung enthalten sind, als Freifasern vorliegen. Die durchschnittliche Verweildauer der Fasern der Faserstoffe dieses Gemenges im Pulper wird dann erfindungsgemäß im laufenden Verfahren unter 50 %, vorzugsweise unter 30 % bzw. unter 10 %, der Zeit für einen 95 %igen Aufschluss bei diskontinuierlichem Betrieb gewählt.

Es hat sich überraschender Weise herausgestellt, dass durch den schnellen Abzug der Freifasern bzw. durch die korrespondierend kurze Verweildauer der Fasern im Pulper und/oder durch die geringe Freifaserdichte im Freifaseraustrag wesentlich schneller Fasern aus Stippen bzw. von Begleitstoffen getrennt werden als nach dem Stand der Technik, was zu den hohen Durchsätzen führt. Darüber hinaus kann die kurze Verweildauer auch zu einer äußerst schonenden Behandlung der Fasern führen, so dass diese als hochwertiger Wertstoff bzw. als sehr hochwertige Fasern für eine nachfolgende Verarbeitung, wie beispielsweise für eine nachfolgende Papierherstellung zur Verfügung stehen. Selbiges gilt auch für die gewonnenen bzw. weitgehend von Fasern befreiten Begleitstoffe. Insbesondere kann die Bildung von Stickys im Pulper selbst vermieden werden, die als Agglomerate klebender Verunreinigungen sich bei längerer Verweildauer im Pulper bilden und dann bei den Anordnungen nach dem Stand der Technik nur sehr schlecht entfernt werden können (Sekundärstickys). Im Übrigen verhindert auch die schonende Behandlung und ergänzend die kurze Aufenthaltszeit der dem Pulper aufgegebenen Mischung das Zerschlagen der Stückstoffe zu Stickys (Primärstickys).

Dementsprechend ist es vorteilhaft, wenn die durchschnittliche Verweildauer der Freifasern im Pulper 6 min oder kleiner ist. Hierbei wird die durchschnittliche Verweildauer der Freifasern als das Volumen des Pulpers dividiert durch den Volumenstrom des Dispersionsmittels durch den Pulper ermittelt, indem davon ausgegangen wird, dass die Freifasern von dem Volumenstrom erfasst und mitgeführt werden. Auf diese Weise kann insbesondere eine besonders schonende Behandlung der Freifasern gewährleistet werden. Darüber hinaus kann hierdurch auch eine überraschende Leistungssteigerung erzielt werden, so dass die hierfür benötigten Pumpleistungen überraschender Weise nicht übermäßig ansteigen. Besonders vorteilhaft sind Verweildauern von 3 min, insbesondere 30 s bzw. 15 s, die darüber hinaus auch noch die Bildung von Stickys, wie vorstehend beschrieben, minimieren.

Dementsprechend wird kumulativ bzw. alternativ ein Verfahren zum Gewinnen von Fasern aus einer Fasern enthaltenden Mischung vorgeschlagen, bei welchem die Mischung einem Pulper mit einem Faserstoffaustrag aufgegeben wird und welches sich dadurch auszeichnet, dass die durchschnittliche Verweildauer der Freifasern im Pulper 6 min oder kleiner ist.

Vorzugsweise liegt in dem Pulper eine Betriebstemperatur zwischen 40 °C und 90 °C vor. Insbesondere hat sich eine Betriebstemperatur zwischen 50 °C und 85 °C, vorzugsweise zwischen 60 °C und 80 °C, als vorteilhaft erwiesen. Derartige Betriebstemperaturen führen überraschender Weise auch unabhängig von den übrigen Merkmalen vorliegender Erfindung bei einer Gewinnen von Fasern aus einer Fasern enthaltenden Mischung, bei welchem die Mischung einem Pulper mit einem Faserstoffaustrag aufgegeben wird, zu einem erheblich schonenderen Aufschluss der Fasern, so dass die durchschnittlichen Verweilzeiten verkürzt werden können. Hierbei werden trotz der hohen Temperaturen die Fasern nicht wesentlich nachteilig beeinflusst. Darüber hinaus schädigen die Temperaturen auch die Begleitstoffe, selbst wenn diese Kunststoffe, wie PVC oder PE, sind, nicht. Insbesondere kommt es in diesem Zusammenhang nicht zu den eigentlich zu erwartenden Zopfbildungen oder Verklumpungen, wenn die Kunststoffe erwärmt und somit klebriger und weicher werden.

Weitere Vorteile, Ziele und Eigenschaften vorliegender Erfindung werden anhand der nachfolgenden Beschreibung anliegender Zeichnung erläutert, in welcher beispielhaft zwei Pulper dargestellt sind.

Es zeigen
- Figur 1: einen sich nach oben hin verjüngenden Pulper mit einer rotierenden Schraube, welche zweifunktional ausgebildet ist;
- Figur 2: die Hüllkurve der zweifunktionalen Pulperschraube aus der Figur 1, wobei die Hüllkur- ve im Bereich der radialen Manteloberfläche eine Steigerungsänderung aufweist;
- Figur 3: einen Pulper mit einer Pulperinnenwandung, deren Steigung sich entlang einer Schrau- benrotationsachse mehrfach ändert, und mit einem kontinuierlichen Faserstoffaustrag und einem kontinuierlichen Begleitstoffaustrag;
- Figur 4: einen Pulper mit einer Pulperinnenwandung, deren Steigung sich entlang einer Schrau- benrotationsachse im Wesentlichen nur einfach ändert, und mit einem kontinuierlichen Faserstoffaustrag und einem kontinuierlichen Begleitstoffaustrag;
- Figur 5: einen weiteren Pulper mit einem kontinuierlichen Faserstoffaustrag und einem kontinu- ierlichen Begleitstoffaustrag;
- Figur 6: einen alternativen Pulper mit einem kontinuierlichen Faserstoffaustrag, dem periodisch Begleitstoffe entnommen werden;
- Figur 7: ermittelte Zerfaserungswerte (Zerfaserungskurven) für verschiedene Pulper bei diskonti- nuierlichem Betrieb mit logarithmischer Annäherungskurve;
- Figur 8: die Zerfaserungswerte (Zerfaserungskurven) nach Figur 3 mit potentieller Annäherungs- kurve;
- Figur 9: die Zerfaserungsleistung (erste Ableitung) der Pulper nach Figuren 3 und 4;
- Figur 10: die Produktionsleistung dieser Pulper; und
- Figur 11: die spezifische Produktionsleistung dieser Pulper.

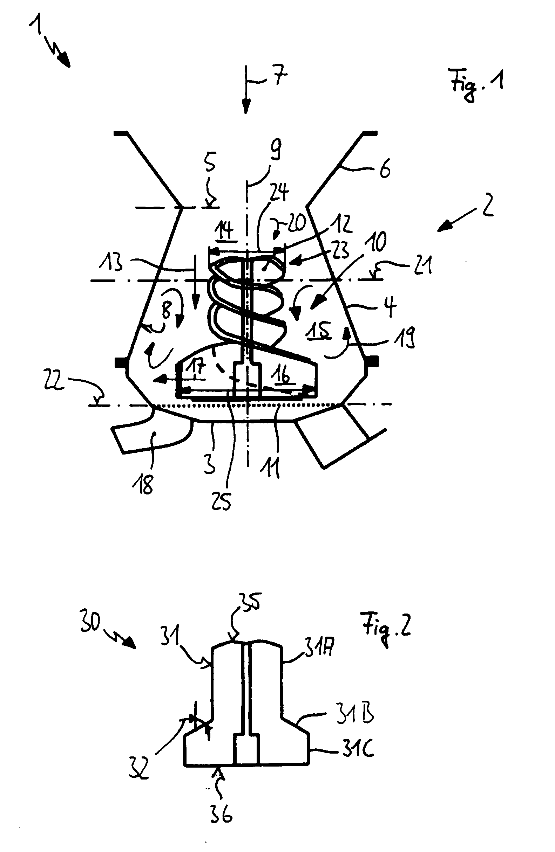

Der in der Figur 1 gezeigte Pulper 1 umfasst einen Pulperkörper 2 der einen Pulperboden 3 aufweist, von welchem ausgehend sich eine sukzessiv nach oben hin zunächst erweiternde und dann verjüngende Pulperhauptwandung 4 aufbaut. Ab einer maximalen Füllhöhe 5 des Pulpers 1 weitet sich der Pulperkörper 2 als Eintragsöffnung 6 aus. Über die Eintragsöffnung 6 erfolgt zumindest der Eintrag eines Gemenges 7 in den Pulper 1.

Die Pulperhauptwandung 4, insbesondere die Pulperinnenwandung 8, verjüngt sich konzentrisch sukzessiv ausgehend von einem breitesten Bereich bis hin zur maximalen Füllhöhe 5 entlang einer und um eine Schraubenrotationsachse 9 einer Pulperschraube 10. Die Pulperschraube 10 ist mittig innerhalb des Pulperkörpers 2 und unmittelbar oberhalb eines Pulpersiebes 1 angeordnet.

In diesem Ausführungsbeispiel bilden sowohl die Pulperschraube 10 als auch das Pulpersieb 11 jeweils ein Trennmittel, um Fasern von Fasern aufweisenden Bestandteile des Gemenges 7 zu lösen bzw. zu trennen. Das Gemenge kann beispielsweise Konglomerate aus Fasern, wie Papierschnipsel oder Etiketten, und/oder faserfreie Stoffe, wie beispielsweise Folienschnipsel u. ä., an denen Fasern anhaften, wie beispielsweise Rejekte, umfassen.

Um diese Vorgänge besonders effektiv zu gestalten bzw. ablaufen zu lassen, weist die Pulperschraube 10 zwei voneinander verschiedene Arbeitsbereiche auf, wobei die beiden voneinander verschiedene Arbeitsbereiche der Pulperschraube 10 unterschiedliche Funktionalitäten verleihen.

So weist die Pulperschraube 10 in ihrem oberen Bereich einen Axialförderer 12 auf, der in diesem Ausführungsbeispiel als Schneckentrieb ausgebildet ist. Mittels des Axialförderers 12 der Pulperschraube 10 wird das Gemenge 7 gemäß einer Axialhauptförderrichtung 13 von einem Vorreaktionsraum 14 in einen Reaktionsraum 15 des Pulpers 1 gefördert.

Der Axialförderer 13 geht unmittelbar in einen Radialförderer 16 der Pulperschraube 10 über. Mittels des Radialförderers 16 wird das Gemenge in eine Radialhauptförderrichtung 17 nach außen gefördert, um dann nach oben abgelenkt zu werden. Durch die nach unten weisende, durch den Axialförderer 12 bedingte Strömung wird das Gemenge dann wieder nach unten beschleunigt, so dass sich eine Hauptumwälzung 19 ergibt. Hierdurch werden die Fasern besonders effektiv gelöst, passieren anschließend das Pulpersieb 11 und werden über einen entsprechenden Faserstoffaustrag 18 (hier nur beispielhaft beziffert) aus dem Pulper 1 befördert.

Der Reaktionsraum 15 des vorliegenden Pulpers 1 zeichnet sich im Wesentlichen dadurch aus, dass in diesem Bereich die Hauptumwälzung 19 des Gemenges 7, insbesondere auch in vertikaler Richtung, erfolgt. Der Vorreaktionsraum 14 liegt dementsprechend oberhalb des Reaktionsraums 15 und zeichnet sich durch eine geringere Umwälzung 20 bzw. lediglich eine im Wesentlichen horizontale Umwälzung des Gemenges 7 aus. Der Vorreaktionsraum 14 erstreckt sich vorliegend von einer oberen Hauptumwälzgrenze 21 bis zur maximalen Füllhöhe 5 des Pulpers 1. Der Reaktionsraum 15 erstreckt sich von der oberen Hauptumwälzgrenze 21 bis zu einer unteren Hauptumwälzgrenze 22, die vorliegend von dem Pulpersieb 11 gebildet ist.

Die geringe Umwälzung 20 im Vorreaktionsraum 14 entsteht hauptsächlich dadurch, dass ein Ende 23 der Pulperschraube 10 bis in den Vorreaktionsraum 14 hineinragt und von dort ausgehend das Gemenge nach unten beschleunigt, so dass die Hauptumwälzung 19 nicht bis in den Vorreaktionsraum 14 gelangen kann. Durch das Schraubenende 23 und die Hauptumwälzung 19 wird die geringe Umwälzung 20 im Vorreaktionsraum 14 verursacht.

Der Axialförderer 12 hat einen Axialfördererdurchmesser 24 und der Radialförderer 16 hat einen Radialfördererdurchmesser 25, wobei der Axialfördererdurchmesser 24 kleiner als der Radialfördererdurchmesser 25 ist.

Der Pulper 1 hat zumindest im Bereich des Radialförderers 16 ein Durchmesserverhältnis von Pulperschraubenaußendurchmesser/Pulperinnendurchmesser, welches größer als 1/3 ist.

Die in der Figur 2 gezeigte Hüllkurve 30 bildet schematisch die Außenkontur der in der Figur 1 gezeigten Pulperschraube 10 ab. Die Hüllkurve 30 hat in diesem Ausführungsbeispiel einen radialen Manteloberflächenbereich 31, der vorliegend in drei Unterbereiche 31 A, 31 B und 31C aufgeteilt ist. An den jeweiligen Pulperschraubenenden 23 (hier nur explizit oben beziffert, siehe Figur 1) weist die Hüllkurve 30 einen oberen axialen Mantelflächenbereich 35 und einen unteren axialen Mantelflächenbereich 36 auf, welche jedoch vorliegend von sekundärem Interesse sind.

Primär ist es vorliegend von Bedeutung, dass der radiale Manteloberflächenbereich 31 eine Steigungsänderung 32 aufweist, die jeweils an den Übergängen zwischen den Unterbereichen 31A, 31B und 31C vorgesehen sind. Ausgehend von dem unteren axialen Manteloberflächenbereich 36 beginnt der radiale Manteloberflächenbereich 31 mit dem Unterbereich 31C, der in den mittleren Unterbereich 31B übergeht. Der mittlere Unterbereich 31B geht dann in den oberen Unterbereich 31A über.

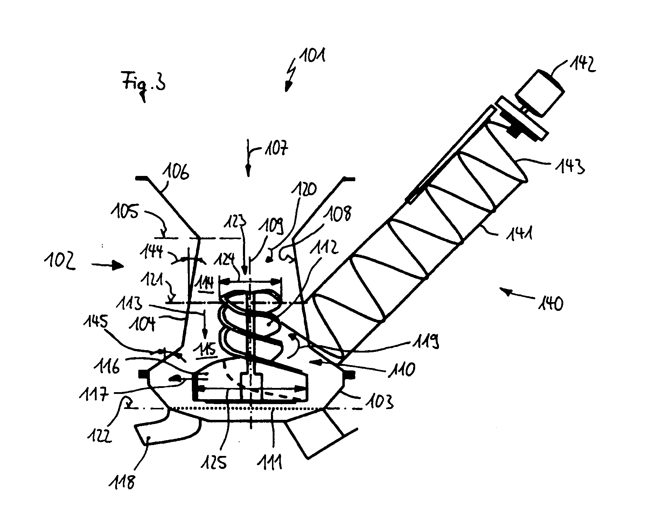

Der in der Figur 3 gezeigte Pulper 101 umfasst einen Pulperkörper 102, der in drei Bereiche einteilbar ist. Der erste Bereich wird von einem Pulperboden 103 gebildet, an welchem sich eine Pulperhauptwandung 104 des Pulperkörpers 102 anschließt. Im Bereich der maximalen Füllhöhe 105 des Pulpers 101 geht die Pulperhauptwandung 104 in den Bereich einer Eintragsöffnung 106 des Pulpers 101 über.

Im Bereich der Pulperhauptwandung 104 ist ein separater Begleitstoffaustrag 140 an dem Pulper 101 1 vorgesehen. Vorliegend verfügt der Begleitstoffaustrag 140 über ein Austragsrohr 141, in welchem eine von einem Austragsmotor 142 angetriebene Austragsschnecke 143 umläuft. Es versteht sich, dass anstelle der Austragsschnecke 143 beispielsweise auch ein Greifer oder ein Förderband als Austragsorgan am Begleitstoffaustrag 140 zu Einsatz kommen kann, wie dieses insbesondere auch bei dem Pulper 1 nach Figur 1 vorgesehen sein kann.

Im Pulper 101 selbst sind als Trennmittel, durch welche die Fasern von den Fasern enthaltenen Bestandteilen getrennt werden, eine Pulperschraube 110 und ein Pulpersieb 111 angeordnet. Die Pulperschraube 110 ist unmittelbar oberhalb des Pulpersiebes 111 platziert und rotiert um eine Schraubenrotationsachse 109. Die Pulperschraube 110 weist einen ersten Arbeitsbereich auf, der als Axialförderer 112 ein in dem Pulper 101 eingefülltes Gemenge 107 in einer Axialhauptförderrichtung 113 von der Eintragsöffnung 106 zu dem Pulperboden 103 fördert. Als weiteren Arbeitsbereich umfasst die Pulperschraube 110 einen Radialförderer 116. Im vorliegenden Ausführungsbeispiel hat der Axialförderer 112 einen Axialfördererdurchmesser 124, der wesentlich geringer ist als ein Radialfördererdurchmesser 125 des Radialförderers 116, wobei die Hüllekurve der Schraube der in Figur 2 dargestellten Hüllkurve entspricht.

Die in dem Pulper losgelösten Fasern gelangen durch das Pulpersieb 111 in einen Faserstoffaustrag 118 und werden so aus dem Pulper 101 abgeführt.

Das Trennen der Fasern aus dem Gemenge 107 wird in diesem Ausführungsbeispiel gegenüber dem in Figur 1 dargestellten Ausführungsbeispiel noch weiter verbessert, indem die Pulperinnenwandung 108 derart ausgebildet ist, dass sie der Kontur der Pulperschraube 110 angepasst ist und ihr nachfolgt. So weist die Pulperinnenwandung 108 zwei voneinander verschiedene Steigungsänderungen, siehe insbesondere 144 und 145 auf, wobei die Steigungsänderung 144, 145 dem Übergang zwischen 31A und 31B in Figur 2 und die Steigungsänderung zwischen Pulperboden und 145 dem Übergang zwischen 31B und 31C in Figur 2 entspricht.

Insbesondere im Arbeitsbereich des Radialförderers 116 hat der Pulper 101 ein Durchmesserverhältnis von Schraubenaußendurchmesser/Pulperinnendurchmesser, welches größer als ein Drittel ist. Hierdurch wird ein besonders effektives Lösen und Trennen der Fasern von Begleitstoffen erzielt.

Die Pulperschraube 110 ist vorliegend im Wesentlichen in einem Reaktionsraum 115 des Pulpers 101 1 angeordnet, sodass lediglich ein Ende 123 der Pulperschraube 110 in einen Vorreaktionsraum 114 hineinragt. Der Reaktionsraum 115 erstreckt sich vorliegend von einer unteren Hauptumwälzgrenze 122, die im Wesentlichen von dem Pulpersieb 111 gebildet wird, bis zu einer oberen Hauptumwälzgrenze 121, welche sich dadurch auszeichnet, dass sich in diesem Bereich ein Übergang von einer Hauptumwälzung 119 zu einer geringeren Umwälzung 120 ergibt, wie bereit bei dem zuvor erläuterten Ausführungsbeispiel dargestellt.

Die obere Hauptumwälzgrenze 121 kann sich innerhalb des Pulpers 101 entlang der Schraubenrotationsachse 109 verlagern, da sie unter anderem auch von dem zu verarbeitenden Gemenge 107 und/oder der Rotationsgeschwindigkeit der Pulperschraube 110 abhängt. Wesentlich ist jedoch, dass die obere Hauptumwälzgrenze 121 stets im Bereich des Pulperschraubenendes 123 liegt, sodass das Ende 23 der Pulperschraube 110 nach Möglichkeit im Vorrotationsraum 114 angesiedelt ist.

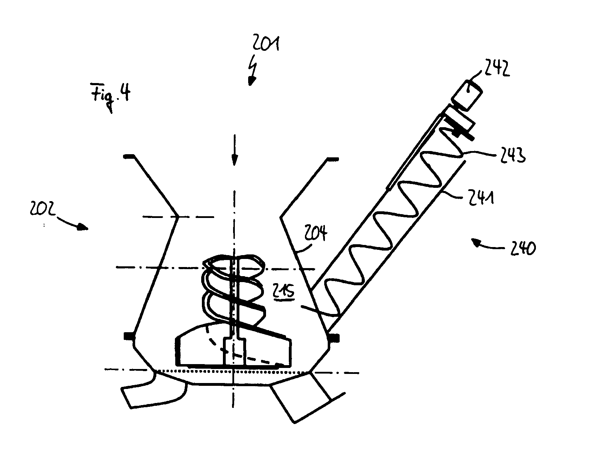

Der in der Figur 4 gezeigte Pulper 201 hat im Wesentlichen einen identischen Aufbau wie der vorstehend beschriebene Pulper 1 aus der Figur 1, wobei zusätzlich an einem Pulperkörper 202 ein Begleitstoffaustrag 240 angeordnet ist. Der Begleitstoffaustrag 240 umfasst ein Austragsrohr 241. In dem Austragsrohr 241 rotiert eine Austragsschnecke 243, die mittels eines Austragsmotors 242 angetrieben ist. Der Begleitstoffaustrag 240 ist im Bereich einer Pulperhauptwandung 204 vorgesehen und gewährleistet eine kontinuierliche Entnahme der Begleitstoffe aus dem Reaktionsraum 215 des Pulpers 201.

Da bis auf den Begleitstoffaustrag 240 der Pulper 201 identisch mit dem Pulper 1 aus der Figur 1 ist und um Wiederholungen hinsichtlich der vorliegenden Erläuterung zu vermeiden, wird auf eine weitere Beschreibung des Pulpers 201 verzichtet.

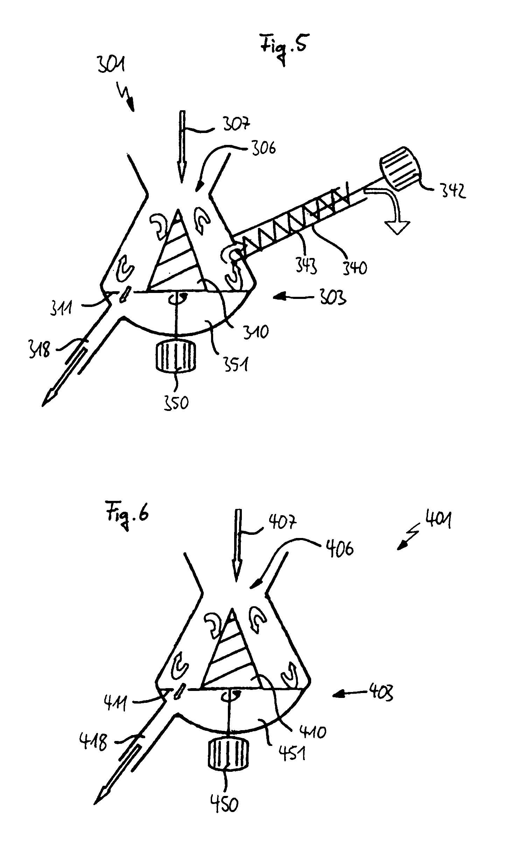

Die in den Figuren 5 und 6 dargestellten Pulper 301, 401 weisen jeweils einen Treiber 310, 410 auf, der von einem Motor 350, 450 angetrieben wird. Der Treiber 310, 410 setzt ein in den Pulper 301, 401 befindliches Gemenge 307, 407 aus Stückstoffen, wie Begleitstoffen und/oder Stippen, und Freifasern in Bewegung und sorgt hierdurch dafür, dass sich an den Begleitstoffen anhaftende Fasern bzw. zu Stippen vereinigte Fasern lösen. Diese Mischung wird nach Bedarf dem Pulper 301, 401 in an sich bekannter Weise über den hier lediglich schematisch skizzierten Gemengeeintrag 307, 407 durch eine obere Öffnung 306,406 dem Pulper 301, 401 nach Bedarf aufgegeben. Selbiges gilt für Wasser. Es versteht sich, dass an dieser Stelle gegebenenfalls auch ein seitlicher Eintrag erfolgen kann.

Die Pulper 301, 401 verfügen in ihrem unteren Teil 303, 403 (Pulperboden) über ein Pulpersieb 311, 411, welches als statische Trennmittel dienen und derart gewählt sind, dass nach Möglichkeit lediglich im Wasser gelöste Freifasern dieses durchdringen können. Es versteht sich, dass auch kleinere Bestandteile der Begleitstoffe, sollten derartige kleine Bestandteile in dem Pulper 301, 401 vorliegen, die Siebe 311, 411 durchdringen können, wobei diese dann später herausgefangen werden. Andererseits treten bei diesem Verfahren verhältnismäßig wenig derartig kleine Begleitstoffe auf, da der Pulper 301, 401 an sich die ihm aufgegeben Materialien nicht zerstört sondern lediglich durch mechanische Beanspruchungen voneinander trennt.

Haben die Fasern das Sieb 311, 411 durchquert, gelangen sie in einen Unterlauf 106, 206 und werden in Wasser gelöst über einen Faserstoffaustrag 318, 418 gelöst ausgetragen. Auch bei diesen Pulpern wird im unteren Bereich ein Reaktionsraum gebildet, über welchem jeweils ein Vorreaktionsraum vorgesehen ist (hier nicht explizit dargestellt). Auch folgt die Pulperwandung im Wesentlichen der Schraubenform, so dass insbesondere das Verhältnis Pulperschraubenaußendurchmesser/Pulperinnendurchmesser größer als 1/3 ist

Der im Figur 5 dargestellte Pulper 301 verfügt darüber hinaus noch über einen separaten Begleitstoffaustrag 340, der im vorliegenden Ausführungsbeispiel über eine Schnecke 343, welche von einen Motor 342 angetrieben wird, dargestellt ist. Es versteht sich, dass der Begleitstoffaustrag 340 das in dem Pulper 301 befindliche Gemenge 307 aus Stückstoffen, wie Begleitstoffen und/oder Stippen, und Freifasern sowie ggf. etwas Wasser aus dem Pulper 301 entnimmt und wahlweise kontinuierlich oder diskontinuierlich betrieben werden kann. Bei dem in Figur 6 dargestellten Ausführungsbeispiel erfolgt der Stückstoffaustrag durch die Eintragsöffnung 406. Auch hier wird über den Stückstoffaustrag das in dem Pulper 401 befindliche Gemenge 407 aus Stückstoffen, wie Begleitstoffen und/oder Stippen, und Freifasern sowie ggf. etwas Wasser aus dem Pulper 401 entnommen.

Im Betrieb werden vorzugsweise die Siebe 311, 411 und die Treiber 310, 410 derart gewählt, dass die Pulper 301, 401 mit einem Freifaseranteil zwischen 0,3% und 1,5% bzw. mit einem Anteil an Stückstoffen zwischen 99,7% und 98,5% gefahren werden können. Durch die Wahl des Durchsatzes beim Faserstoffaustrag aber auch durch die Wahl der aufgegebenen Wassermenge, der aufgegebenen Menge der Mischung und durch den geeigneten Begleitstoffaustrag sowie durch die Wahl der Pulpergeometrie wird darüber hinaus die Gesamtstoffdichte im Pulper 310, 410 zehnmal so hoch gewählt, wie die Faserstoffdichte im Unterlauf 351, 451. Hierbei wird dafür gesorgt, dass die Freifaserdichte im Unterlauf 351, 451 bei 1% und darunter liegt, sodass die Gesamtstoffdichte im Pulper 310, 410 bei 10% eingestellt wird.

An dieser Stelle sei angemerkt, dass die der Erfindung zu Grunde liegenden Pulper sich sowohl für einen kontinuierlichen, einen periodischen als auch einen kontinuierlich getakteten Einsatz eignen.

Je nach konkreten Gegebenheiten kann insbesondere die Gesamtstoffdichte weit höher liegen und vorzugsweise bis 30% betragen.

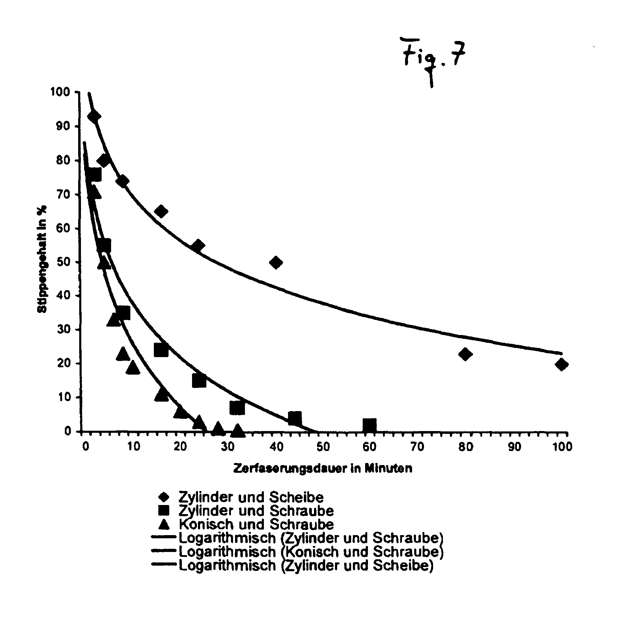

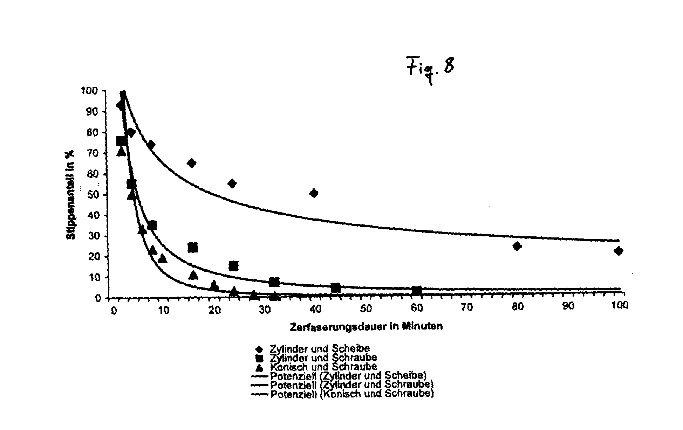

Entsprechend der Darstellungen in Figuren 7 und 8 kann bei gegebenen Verhältnissen, insbesondere bei gegebenen Pulper und bei gegebenem Material, welches dem Pulper aufgegeben wird, die Auflösezeit und somit die Verweildauer bestimmt werden. Hierbei werden zuvor entsprechende Messungen des Stippengehalts im diskontinuierlichen Betrieb durchgeführt, die in folgender Tabelle für verschiedene Pulpertypen (Zylinder und Scheibe; Zylinder und Schraube; Konisch und Schraube) exemplarisch dargestellt sind.

**Tabelle 1**

| | Zerfaserungsdauer in Minuten | | | | | | | | | | | | | | | |
|---|---|---|---|---|---|---|---|---|---|---|---|---|---|---|---|---|
| | 0 | 2 | 4 | 6 | 8 | 10 | 16 | 20 | 24 | 28 | 32 | 40 | 44 | 60 | 80 | 100 |
| Zylinder und Scheibe | | 93 | 80 | | 74 | | 65 | | 55 | | | 50 | | | 23 | 20 |
| Zylinder und Schraube | | 76 | 55 | | 35 | | 24 | | 15 | | 7 | | 4 | 2 | | |
| Konisch und Schraube | | 71 | 50 | 33 | 23 | 19 | 11 | 6 | 3 | 1 | 0,5 | | | | | |

Hierbei sind die Kurven in Figur 7 anhand der dargestellten Messwerte logarithmisch über die Funktionen (Zylinder und Scheibe: y = -21,739Ln(x) + 108,73; Zylinder und Schraube: y = -26,432Ln(x) + 85,288; Konisch und Schraube: y = -31,143Ln(x) + 81,795) und die Kurven in Figur 8 anhand der dargestellten Messwerte potenziell über die Funktionen (Zylinder und Scheibe: y = 148,43x^{-0,4539}; Zylinder und Schraube: y = 247,56x-^{1,2688}; Konisch und Schraube: y = 595,85x^{-2,1552}) angenähert.

Andererseits lässt sich hieraus auch die Zerfaserungsleistung ermitteln, wobei bei diesem Ausführungsbeispiel eine graphische Auswertung der in Tabelle 1 bzw. in Figuren 7 und 8 dargestellten Messwerte erfolgte, indem an ausgewählten Punkten die Tangente angelegt wurde. Hieraus ergaben sich die folgenden, in Tabelle 2 dargestellten Werte.

**Tabelle 2**

| | | | | | | | | | | | | | | | | | | | | | |
|---|---|---|---|---|---|---|---|---|---|---|---|---|---|---|---|---|---|---|---|---|---|
| Freifasern | 0 | 5 | 10 | 15 | 20 | 25 | 30 | 35 | 40 | 45 | 50 | 55 | 60 | 65 | 70 | 75 | 80 | 85 | 90 | 95 | 100 |
| Stippen | 100 | 95 | 90 | 85 | 80 | 75 | 70 | 65 | 60 | 55 | 50 | 45 | 40 | 35 | 30 | 25 | 20 | 15 | 10 | 5 | 0 |
| Zylinder und Scheibe | | | | | 4,3 | | | | 1,1 | | | | 0,6 | | 0,4 | | | | | | |
| Zylinder und Schraube | | | | | 12,0 | | | | 8,9 | | | | 5,0 | | | | | | 0,8 | 0,3 | |
| Konisch und Schraube | | | | | 13 | | | | 10,0 | | | | | | 5,7 | | | | 1,3 | 0,5 | |

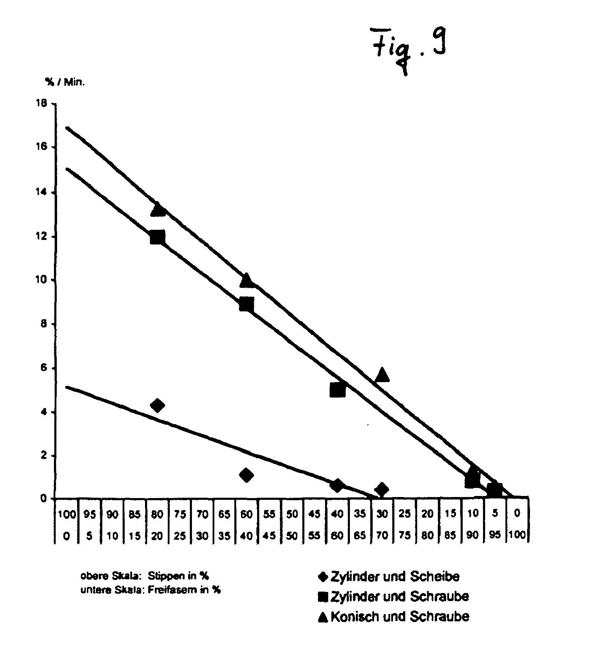

In Figur 9 sind die entsprechenden Daten aufgetragen und linear extrapoliert, wobei sich für den Pulper "Zylinder und Scheibe" y = -0,852x + 17,737, für den Pulper "Zylinder und Schraube" y = - 0,7894x + 15,821 und für den Pulper "Konisch und Schraube" y = -0,3729x + 5,5153 als graphische Annäherung ergibt.

Auch lässt sich die Produktionsleistung als Zerfaserungsleistung multipliziert mit dem Gesamteintrag darstellen, was exemplarisch in der nachfolgenden Tabelle 3 dargestellt ist.

**Tabelle 3**

| | | | | | | | | | |
|---|---|---|---|---|---|---|---|---|---|
| Stippen | 100 | 93 | 80 | 60 | 40 | 30 | 10 | 5 | 0 |
| Zylinder und Scheibe | | 2 | 2 | 0,5 | 0,3 | 0,2 | | | |
| Zylinder und Schraube | | | 10 | 7,5 | 4,2 | | 0,7 | 0,2 | |
| Konisch und Schraube | | | 14 | 11 | | 6,2 | 1,4 | 0,5 | |

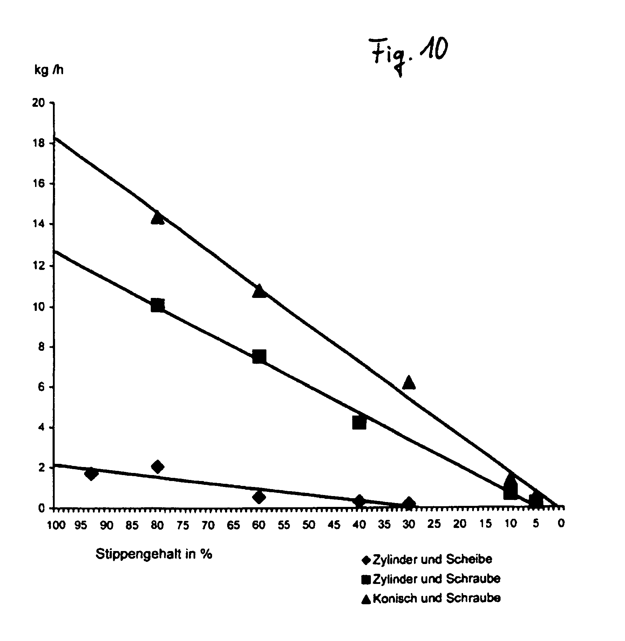

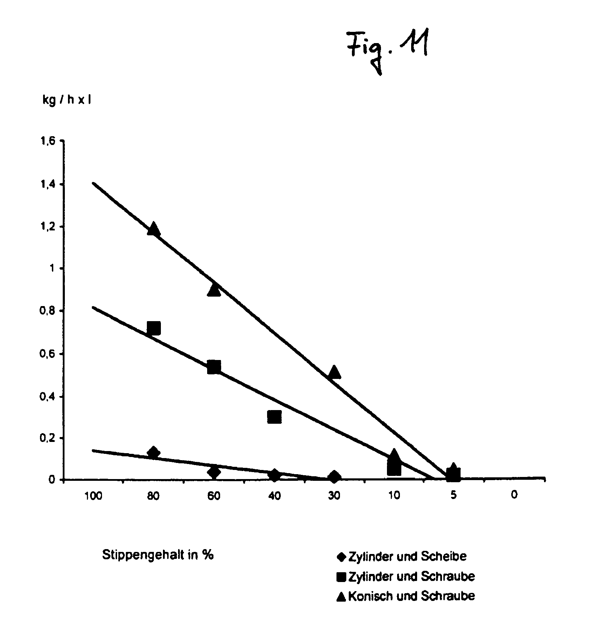

Dieses ist entsprechend in Figur 10 grafisch dargestellt. Ebenso lässt sich hieraus eine spezifische Produktionsleistung als kg / h · 1 ermitteln, die exemplarisch in Tabelle 4 und in Figur 11 dargestellt ist.

**Tabelle 4**

| | | | | | | | | |
|---|---|---|---|---|---|---|---|---|
| Stippen | 100 | 80 | 60 | 40 | 30 | 10 | 5 | 0 |
| Zylinder und Scheibe | | 0,128 | 0,034 | 0,019 | 0,011 | | | |
| Zylinder und Schraube | | 0,720 | 0,538 | 0,300 | | 0,047 | 0,017 | |
| Konisch und Schraube | | 1,192 | 0,900 | | 0,515 | 0,115 | 0,045 | |

Wie anhand der Figuren unmittelbar ersichtlich, lässt sich durch die dem Anspruch gemäßen Maßnahmen gezielt die Leistung des Pulpers steigern. Des weiteren hat sich überraschender Weise herausgestellt, dass durch die extrem kurze Verweildauer im Pulper eine Bildung von Agglomeraten bzw. Stickys dadurch, dass sich an kleinsten klebenden oder haftenden Resten weitere klebende oder haftende Reste bilden, die dann immer größer werden, vermieden werden kann. Im Übrigen verhindert auch die schonende Behandlung und ergänzend die kurze Aufenthaltszeit der dem Pulper aufgegebenen Mischung das Zerschlagen der Stückstoffe zu Stickys. Es versteht sich, dass die Verhältnisse im Pulper nicht auf die vorstehend beschriebene Art und Weise gewählt werden müssen. Vielmehr sind auch andere Methoden, beispielsweise im kontinuierlichen Betrieb, denkbar, um die Zerfaserungszeiten und die Pulperleistungen ermitteln und optimieren zu können.

Im Übrigen ist zu betonen, dass die in den Figuren 7 bis 11 dargestellten Annäherungen sehr grob sind und die genauen Verhältnisse nicht zur Gänze beschreiben können. Es wird vermutet, dass die Zerfaserungskurve an sich eine wesentlich komplexere Gestalt hat, was beispielsweise durch Phasenübergänge oder ähnliche Phänomene des im Pulper befindlichen und von diesem verarbeiteten Gemenges bedingt sein kann. Bei genauer Betrachtung ergibt sich die Vermutung, dass gerade bei kurzen Zerfaserungszeiten in den Figuren 7 und 8 die Zerfaserungsleistung, also die negative Werte der ersten Ableitung der tatsächlichen Messwerte, erheblich höher liegt als die jeweilige Annäherungskurve bzw., als dieses bei längeren Zerfaserungszeiten der Fall ist. Insofern scheint vorliegend erfindungsgemäß ein Bereich der Zerfaserungskurve gewählt worden zu sein, in welcher diese besonders steil also die Zerfaserungsleistung aus welchen Gründen auch immer besonders hoch ist, um so - entgegen der Auffassung aller auf diesem Gebiet tätigen Fachleute - einen Pulper bei sehr geringem Freifaseranteil und kurzer Verweildauer des dem Pulper aufgegebenen Gemisches zu betreiben, wodurch sich noch ergänzend Vorteile, wie eine äußerst schonende Behandlung der aufgegebenen Mischung und eine Vermeidung der Bildung von Stickys, bei geeigneter Wahl der Parameter insgesamt erzielen lassen.

## Patentansprüche

1. Verfahren zum Gewinnen von Fasern aus einer Fasern enthaltenden Mischung, bei welchem die Mischung einem Pulper (101, 102) mit einem Faserstoffaustrag (107, 207) aufgegeben wird, ***dadurch gekennzeichnet, dass*** der Freifaseranteil im Pulper unter 80% beträgt.

2. Verfahren nach Anspruch 1, ***dadurch gekennzeichnet, dass*** der Freifaseranteil im Pulper unter 75% beträgt.

3. Verfahren nach Anspruch 2, ***dadurch gekennzeichnet, dass*** der Freifaseranteil im Pulper unter 70% beträgt.

4. Verfahren zum Gewinnen von Fasern aus einer Fasern enthaltenden Mischung, bei welchem die Mischung einem Pulper (101, 102) mit einem Faserstoffaustrag (107, 207) aufgegeben wird, ***dadurch gekennzeichnet, dass*** der Anteil an Stückstoffen, wie Schnitzeln, Schnipseln, Stippen und Begleitstoffen, im Pulper über 20% beträgt.

5. Verfahren nach Anspruch 4, ***dadurch gekennzeichnet, dass*** der Anteil an Stückstoffen im Pulper über 25% beträgt.

6. Verfahren nach Anspruch 5, ***dadurch gekennzeichnet, dass*** der Anteil an Stückstoffen im Pulper über 30% beträgt.

7. Verfahren nach einem der vorstehenden Ansprüche, ***dadurch gekennzeichnet, dass*** der Freifaseranteil im Pulper unter 10% beträgt.

8. Verfahren nach Anspruch 7, ***dadurch gekennzeichnet, dass*** der Freifaseranteil im Pulper unter 5% beträgt.

9. Verfahren nach Anspruch 8, ***dadurch gekennzeichnet, dass*** der Freifaseranteil im Pulper unter 1 % bzw. unter 0,5% beträgt.

10. Verfahren nach einem der vorstehenden Ansprüche, ***dadurch gekennzeichnet, dass*** der Anteil an Stückstoffen im Pulper über 90% beträgt.

11. Verfahren nach Anspruch 10, ***dadurch gekennzeichnet, dass*** der Anteil an Stückstoffen im Pulper über 95% beträgt.

12. Verfahren nach Anspruch 11, ***dadurch gekennzeichnet, dass*** der Anteil an Stückstoffen im Pulper über 99% bzw. über 99,5% beträgt.

13. Verfahren zum Gewinnen von Fasern aus einer Fasern enthaltenden Mischung, insbesondere nach einem der vorhergehenden Ansprüche, bei welchem die Mischung einem Pulper (101, 102) mit einem Faserstoffaustrag (107, 207) aufgegeben wird, ***dadurch gekennzeichnet, dass*** die Freifaserdichte im Faserstoffaustrag unter 2% beträgt.

14. Verfahren zum Gewinnen von Fasern aus einer Fasern enthaltenden Mischung, insbesondere nach einem der vorhergehenden Ansprüche, bei welchem die Mischung einem Pulper (101, 102) mit einem Faserstoffaustrag (107, 207) aufgegeben wird, ***dadurch gekennzeichnet, dass*** die Gesamtstoffdichte im Pulper um mindestens den Faktor 10 größer ist als die Faserstoffdichte im Faserstoffaustrag.

15. Verfahren nach einem der vorstehenden Ansprüche, ***gekennzeichnet durch*** einen kontinuierlichen Begleitstoffaustrag.
